Europäisches Patentamt

European Patent Office

Office européen des brevets

(19)

(11) **EP 0 893 910 A1**

(12) **EUROPEAN PATENT APPLICATION**

(43) Date of publication:
27.01.1999 Bulletin 1999/04

(51) Int. Cl.⁶: **H04N 1/405**

(21) Application number: 97830377.4

(22) Date of filing: 21.07.1997

(84) Designated Contracting States:
AT BE CH DE DK ES FI FR GB GR IE IT LI LU MC NL PT SE
Designated Extension States:
AL LT LV RO SI

(71) Applicant: SYFAL S.p.A.
41043 Formigine (MO) (IT)

(72) Inventor: Stefani, Franco
41049 Sassuolo (MO) (IT)

(74) Representative: Gotra, Stefano
BUGNION S.p.A.
No. 25, Via Emilia Est
41100 Modena (IT)

(54) **A process for reproducing high-definition images**

(57) The process comprises: the subdivision of an image to be reproduced into a plurality of tiny areas; attribution to each area of an intensity of grey or base colour of the area; calculation for each area of a threshold value which is determined according to an assumed number as a measure of intensity of grey of at least one neighbouring area from the border of the image to be reproduced; comparison, for each area, of a number assumed as a measure of intensity of grey or base colour of the area with the threshold value previously calculated for the area; generation or not of a point in a corresponding area of the image according to whether the number assumed as a measure of intensity of grey of said area of the image is greater or lower than the threshold value calculated for the area itself.

FIG. 1

EP 0 893 910 A1

## Description

The invention relates to a method for reproducing high-definition images.

The main problem the invention proposes to overcome is that relating to the reproduction of details and nuances usually present in images to be reproduced.

In the case of a black-and-white image, constituted for example by a good photograph, there are very many, hundreds indeed, tones of grey, and in a colour photograph there might even be thousands of different colours. Colour images are usually reproduced using a limited number of basic colours (often four). This means that, for example, a very small number of different inks are used for printing.

The method for printing (whether on paper or ceramic support) various tones with a single basic colour (ink or glaze) is called screening, and is generally based on the subdivision of the image to be reproduced into a series of points.

By varying the characteristics of the points (shape, breadth, frequency etc.) an image can be reproduced which, to the observing eye, recalls the original more or less faithfully while in fact it is physically very different (the reproduced image can be considered as a "digital" monochromatic image if compared to an image characterised by the presence of continuous variations of tones).

The problem of colour printing is more easily explained with reference to a monochromatic print, as the principle remains the same but, obviously is multiplied by at least four for colours. In monochromatic printing, various levels of grey are obtained to produce what it known as a black-and-white print.

The central process of a screening operation is thus that of performing the transformation of an image characterised by innumerable tones of grey into a "digital" monochromatic image, that is, constituted by many points of a same tone of grey. Obviously a "digital" image thus obtained can have no true nuances, though it attempts to recreate them by tricking the eye looking at the arrangement of points of a same tone.

Known screening techniques are based on the subdivision of the image to be reproduced into a plurality of zones, each of which is assigned a number according to the intensity or level of grey (or basic colour) and also on the construction of a corresponding subdivision or grill for the image to be constructed, to each cell of which a number of points is assigned which is proportional to a measure of the intensity or level of grey (or base colour) of the corresponding cell in the image being reproduced.

The prior art contains the following drawbacks.

A first drawback consists in the fact that a large number of points are required for the image to be constructed, and thus a very high definition, so that an acceptable number of grey levels can be obtained.

A further drawback is connected to the nature of the prior art applications themselves, which envisage the use of a grill or screen (of the cells) according to which the points appertaining to the image under production are grouped or distributed. This "order" imposed on the grill originates undesired effects, such as beats or Moiré etc., in cases where more than one colour is used.

The prior art also teaches subdivision of an image to be reproduced into a plurality of tiny areas containing points, attributing to each area a number assumed as the measure of the intensity or level of grey in that area, comparing that number with a prefixed threshold value (constituted by a predetermined level of grey) and producing or not a point in a corresponding area of the image according to whether said number is greater or smaller than the threshold value.

This technique does not allow a sufficient number of grey levels or details to be reconstructed.

The main aim of the present invention is to obviate the drawbacks of the prior art.

An advantage of the present invention consists in its broad range of application.

A further advantage of the present invention consists in the fact that it allows reproduction of a large quantity of details and nuances.

A still further advantage is that the invention eliminates the defects (beats, Moiré, etc. ) which dog the prior art applications in superposing of basic colours; defects which the prior art has attempted to eliminate by variously positioning (by relative angling) the screens of the various colours.

These aims and advantages and more besides are all attained by the present invention as it is characterised in the claims that follow.

Further characteristics and advantages of the present invention will better emerge from the detailed description that follows of a preferred but non-exclusive embodiment of the invention, illustrated purely by way of non-limiting example in the accompanying figures of the drawings, in which:

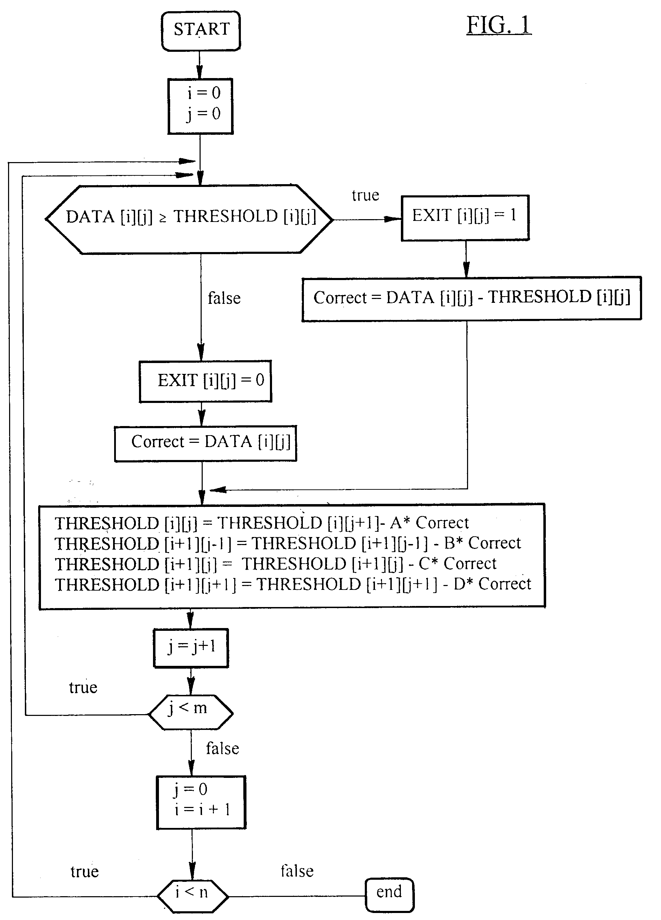

figure 1 is a flow chart of a first embodiment of the invention.

The process of the invention is intended for the reproduction of high-definition images.

It can be used in many applications and can be used both for printing on paper and on textiles, or even for ceramic tiles.

The process comprises the following phases:

subdivision of an image to be reproduced into a plurality of tiny areas;
attribution to each said area of a number assumed to be the measure of the intensity or level of grey (or base colour) of the area itself;
calculation, for each said area, of a threshold value determined according to the assumed number as a measure of intensity or level of grey of at least one of the neighbouring areas in the image to be reproduced;

comparison, for each said area, of the number assumed as the measure of the intensity or level of grey (or base colour) of the area with the said threshold value previously calculated for the area itself;

production or non-production of a point in a corresponding area of the image to be constructed according to whether said number assumed as a measure of the intensity or level of grey of said area in the image to be reproduced is greater or smaller than the threshold value calculated for the area itself.

For each said area the relative threshold value is calculated in such a way that the threshold value itself tends to diminish, with respect to an initial value, with the increase of the number of points reproduced in the neighbouring zone of the "outputting" image to be constructed.

The calculation procedure can be outlined in the accompanying flow chart in which non-neighbouring areas of the image and the correction of the threshold value for each area is based on the influence of four neighbouring areas.

Suppose that the data relating to the image, subdivided into $n$ x $m$ areas, are contained in the DATA matrix composed of $n$ lines and $m$ columns. The element at the cross of the $i$-th line and the $j$-th column is indicated by DATA $[i][j]$ and is a number proportional to the intensity or level of grey of the corresponding area of the image to be reproduced. This number is normally assumed to be variable from value 0 (white) to value 255 (black).

Now construct a THRESHOLD matrix, also formed by $n$ lines and $m$ columns:

each THRESHOLD element $[i][j]$ can assume any value, preferably whole (positive or negative). Each element of this matrix indicates, to be precise, the threshold value compared with the number assumed as the measure of intensity or the level of grey of the corresponding area of the image to be reproduced.

An OUTPUT matrix is derived from the two matrices, which OUTPUT matrix is also formed by $n$ lines and $m$ columns, each OUTPUT element $[i][j]$ of which being able to assume only value 0 or value 1. Value 0 is assumed when it is proved that DATA $[i][j]$<THRESHOLD $[i][j]$, while value 1 is assumed when it is provided that DATA $[i][j] \geq$ THRESHOLD $[i][j]$. Only when value 1 appears is a point printed or inscribed into the corresponding area of the outputting image.

The above-described situation is outlined in figure 1, where an initial threshold value is fixed, whole and positive, with which the THRESHOLD matrix is initialised, and four positive constants are also fixed, which parametrize the local correction mechanism of the threshold value. The values of A,B,C,D can be chosen, within certain limits, arbitrarily as long as the condition A+B+C+D=1 is respected.

For each said area, said threshold value is calculated and thus corrected, also according to whether a point has been generated in at least one neighbouring area of the outputting image. The calculation is made in such a way that the threshold value itself tends to get smaller, with reference to an initial value, as the number of points generated in an area gets smaller with respect to the average numbers assumed as a measure of the intensities found in the corresponding areas belonging to the same image, and vice versa.

## Claims

1. A process for reproducing high-definition images comprising the phases of:

   subdividing an image to be reproduced into a plurality of tiny areas, attributing to each area a number assumed as a measure of an intensity of grey of the area itself, comparing said number with a threshold value, producing or not producing a point in a corresponding area in an outputting image under construction, according to whether said number is greater or smaller than said threshold value, characterised in that said threshold value is calculated for each said area according to at least the number assumed as a measure of the intensity of grey of at least one of the neighbouring areas in said image to be reproduced.

2. The process of claim 1, characterised in that for each said area, said threshold value is calculated in such a way as to get lower as the number assumed as the measure of intensity of grey of said at least one neighbouring area increases, and vice versa.

3. The process of claim 1 or 2, characterised in that said threshold value is also calculated in accordance with the existence or not of a point generated in at least one neighbouring area of said outputting image.

4. The process of claim 3, characterised in that said threshold value is also calculated in accordance with the existence or not of a point generated in at least one neighbouring area of said outputting image, in such a way that the threshold value tends to get lower, with reference to an initial value, as the number of points generated around the area also gets lower, with respect to the average assumed as a measure of intensity of grey found in corresponding areas belonging to said image to be reproduced, and vice versa.

5. The process of any one of the preceding claims, characterised in that said points are geometrically equal.

6. The process of any one of the preceding claims, characterised in that said points exhibit a same intensity of grey.

FIG. 1

START

i = 0
j = 0

DATA [i][j] ≥ THRESHOLD [i][j] —true→ EXIT [i][j] = 1

Correct = DATA [i][j] - THRESHOLD [i][j]

false

EXIT [i][j] = 0

Correct = DATA [i][j]

THRESHOLD [i][j] = THRESHOLD [i][j+1]- A* Correct
THRESHOLD [i+1][j-1] = THRESHOLD [i+1][j-1] - B* Correct
THRESHOLD [i+1][j] =  THRESHOLD [i+1][j] - C* Correct
THRESHOLD [i+1][j+1] = THRESHOLD [i+1][j+1] - D* Correct

j = j+1

j < m

true

false

j = 0
i = i + 1

true          i < n          false          end

**European Patent Office**

**EUROPEAN SEARCH REPORT**

Application Number

EP 97 83 0377

## DOCUMENTS CONSIDERED TO BE RELEVANT

| Category | Citation of document with indication. where appropriate. of relevant passages | Relevant to claim | CLASSIFICATION OF THE APPLICATION (Int.Cl.6) |
|---|---|---|---|
| X<br>Y | EP 0 414 505 A (XEROX CORP.)<br><br>* page 4, line 50 – page 5, line 36 *<br>--- | 1,2,5,6<br>3,4 | H04N1/405 |
| Y | EP 0 382 581 A (CANON K. K.)<br>* page 4, line 56 – page 5, line 54 *<br>--- | 3,4 | |
| A | EP 0 606 132 A (XEROX CORP.)<br>--- | | |
| A | EP 0 702 482 A (XEROX CORP.)<br>----- | | |

TECHNICAL FIELDS
SEARCHED (Int.Cl.6)

H04N

The present search report has been drawn up for all claims

| Place of search | Date of completion of the search | Examiner |
|---|---|---|
| THE HAGUE | 3 December 1997 | De Roeck, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)